# DEMANDE DE BREVET EUROPEEN

(11) **EP 1 790 972 A1**
(43) Date de publication de la demande: **30.05.2007**
(21) Numéro de dépôt: 06112416.0
(22) Date de dépôt: 10.04.2006
(51) Int. Cl.: G01N 21/47, G01M 11/00

(54) **Appareil et méthode pour déterminer les propriétés de réflexion d'une surface**

(30) Priorité: 24.11.2005 BE 200500575; 24.11.2005 EP 05111207
(71) Demandeur: Schreder, 1190 Bruxelles (BE)
(72) Inventeur: Frankinet, Marc, 4460 Horion-Hozemont (BE)
(74) Mandataire: Leherte, Georges M.L.M.

(57) **Abrégé**

L'invention concerne
un appareil portable de mesures des caractéristiques de réflexion d'une surface plane, comprenant des sources lumineuses à faisceaux dirigés sur une même aire de la surface à analyser et des ensembles de cellules photovoltaïques calibrées en luminance orientées selon des angles et dans des plans différents par rapport à la surface à mesurer ;
une méthode pour caractériser les propriétés de réflexion d'une surface nécessaires au calcul d'une installation d'éclairage, comprenant la mesure in situ, en de multiples endroits, des caractéristiques de réflexion de ladite surface au moyen d'un appareil portable de mesure, l'analyse comparative de ces caractéristiques mesurées avec celles contenues dans une base de données, et la génération, à partir de cette analyse, de paramètres permettant de caractériser les propriétés de réflexion de ladite surface ; et
une méthode informatique d'analyse comparative de caractéristiques de réflexion de revêtement routier mesurées au moyen d'un tel appareil et/ou une telle méthode, à des données de référence afin d'établir des "tables-r" représentatives des surfaces de revêtements routiers mesurés.

## Description

L'invention a pour objet de fournir un appareil et une méthode pour déterminer des caractéristiques de réflexion d'une surface, notamment afin d'en déduire les performances souhaitées, en termes de luminance, d'installations d'éclairage.
L'invention a plus particulièrement pour objectif de déduire un ensemble de paramètres représentatifs d'une surface inconnue, tel que celui appelé collectivement la "table-r", plus spécifiquement représentative d'un revêtement routier, à partir de la mesure, sur site, pour certains angles d'incidence et de réflexion, d'un facteur réduit de luminance de cette surface / de ce revêtement routier.

La détermination des caractéristiques de surfaces routières est un aspect important pour pouvoir prédire le niveau de luminance d'éclairages routiers.
En fonction du comportement du revêtement, de nombreux autres paramètres seront influencés, tel que le dessin des systèmes optiques assurant la distribution lumineuse, et la quantité de lumière à mettre en oeuvre pour atteindre le niveau de luminance souhaité. Les caractéristiques de réflexion de la surface routière sont le point de départ d'une installation d'éclairage optimisée. De nombreux progrès sont possibles dans ce domaine, en particulier par une mesure de ces paramètres in situ.

Pour concevoir une installation d'éclairage et l'optimiser en termes de sa luminance, les ingénieurs de l'éclairage doivent pouvoir prédire les niveaux de luminance au niveau de la route. Divers paramètres devront être pris en compte à cet effet : la distribution lumineuse qui est en général assez bien connue et définie par les fabriquant de luminaires, le flux lumineux des lampes, la géométrie de la configuration (largeur de la route, hauteur de l'installation, etc....) et les caractéristiques des revêtements routiers.
La plupart de ces paramètres sont en général bien connus, à l'exception des derniers : les caractéristiques du revêtement routier.

Souvent les calculs de luminance sont réalisés au moyen de logiciels spécifiques et de manière générale en utilisant des caractéristiques théoriques de revêtement : par exemple les paramètres R1, R2, R3 et R4 définis par la CIE (Commission Internationale de l'Eclairage).
Les principes de ces paramètres ("tables-r") et les concepts essentiels des calculs les mettant en ouvre est énoncé dans le présent mémoire en faisant référence à la publication CEI (Commission Internationale de l'Eclairage) n° 30.2, qui traite de ce sujet et dont le contenu fait ainsi intégralement partie du présent mémoire.

L'utilisation de seulement quatre paramètres "tables-r" pour caractériser un si grand nombre de revêtements routiers, suggère que bien des améliorations sont possibles.

Les présents inventeurs ont été des pionniers dans ce domaine et ont effectué de nombreuses mesures de caractéristiques de revêtement routier à l'aide d'un gonio-réflectomètre. Cet instrument est capable de mesurer le comportement d'un revêtement routier, soit pour un angle d'observation de 1° (α = 1° : angle de vue spécifique d'un conducteur d'une voiture) ou pour d'autres angles d'observation (α jusqu'à 90°) plus appropriés à la mesure de caractéristiques de parois de tunnels par exemple. Pour réaliser de telles mesures, il est nécessaire d'extraire au préalable des échantillons de revêtement routier (d'un diamètre de 100 mm à 200 mm) qui seront mesurés en laboratoire. Le paramètre "table-r" (valeur de coefficient réduit) décrivant le comportement du revêtement routier pour un angle d'observation donné (1° pour les applications d'éclairage routier) ainsi obtenu peut alors être introduit dans des logiciels de calculs adaptés (bien connus en soi de l'homme de métier) et la luminance pourra alors être prédite avec une bonne précision.
L'extraction d'échantillons routiers prend cependant du temps et est couteux, ce qui implique qu'en général pas plus que 2 ou 3 échantillons ne sont prélevés et analysés.
La question fondamentale est toutefois : est-ce que ces 2 ou 3 échantillons sont vraiment représentatifs de la surface entière du revêtement routier, sachant qu'un tel revêtement n'est jamais très homogène ? Il est évident que la réponse est "non" et que, par conséquent, la luminance calculée ne sera pas vraiment représentative de la réalité.

Une solution pour améliorer cette situation impliquerait le prélèvement et l'analyse d'un plus grand nombre d'échantillons et de procéder sur base de valeurs moyennes des caractéristiques. Mais comme indiqué précédemment cela est très couteux.
Afin de remédier à ce problème les inventeurs ont imaginé de travailler avec un équipement mobile et de mettre au point le "gonio-reflectomètre portable" selon la présente invention.
Les résultats obtenus sont moins précis que ceux obtenus avec un gonio-reflectomètre de laboratoire, mais grâce au fait que l'on peut aisément multiplier les mesures le résultat global sera néanmoins plus représentatif.

En obtenant une meilleure connaissance des caractéristique des revêtements routiers, en combinant cela avec une conception optimisée des optiques et en mettant en ouvre les plus récentes techniques d'atténuation d'intensité ("dimming"), il devient possible d'offrir un éclairage adéquat ("juste") et d'utiliser exactement la quantité d'énergie nécessaire. Cela permet de sérieux gains d'énergie et est nettement plus écologique.

Il faut souligner, dans ce contexte, qu'éclairer adéquatement ("éclairer juste") n'est possible qu'en connaissant très précisément le taux de réflexion de la chaussée.
Depuis des années, tous les calculs photométriques se font à partir des classes théoriques de revêtements R1, R2, R3 et R4.
L'utilisation d'un "réflectomètre de revêtement" de laboratoire a permis aux inventeurs d'établir que la classification R1, R2, R3, R4 peut conduire à un taux d'erreur pouvant atteindre 100%. Les différences enregistrées avec certains nouveaux revêtement sont encore plus marquées.
Grâce à l'utilisation d'un réfloctomètre de laboratoire, le taux d'erreur est tombé à 15%.
Les inconvénients principaux en sont les opérations de carottage et de restauration de la chaussée. Ce travail destructif et fastidieux est de plus onéreux ce qui en limite son utilisation.

La grande innovation de la méthode selon l'invention est le développement d'un réflectomètre de revêtement mobile permettant la multiplication des mesures in situ. La technique aisée des mesures donne in fine une image plus précise des caractéristiques de réflexion du revêtement à éclairer. L'appareil selon l'invention constitue un instrument de mesure permettant de définir exactement la quantité de lumière à utiliser pour "éclairer juste".

L'appareil / la méthode selon l'invention implique, notamment, que
- la mesure sur site s'effectue au moyen d'un gonio-réflectomètre portable, et/ou
- la mesure en laboratoire de la "table-r" se fait sur un échantillon de revêtement au moyen d'un gonio-réflectomètre de laboratoire, et/ou
- la déduction de la "table-r" se fait par comparaison entre les résultats des mesures faites avec le gonio-réflectomètre portable d'une part sur site sur le revêtement routier inconnu et d'autre part sur des échantillons de revêtements routiers, contenus dans une base de données : Si les résultats des mesures faits au gonio-réflectomètre portable sont suffisamment proches, nous avons démontré que les tables-r correspondantes sont également proches.
   Donc la "table-r" du revêtement inconnu sera proche de celle du revêtement de la base de donnée ayant les résultats de mesure au gonio-réflectomètre portable les plus proches de ceux mesurés sur site (avec le gonio-réflectomètre portable), et/ou
- les mesures sur site sont effectuées selon une géométrie différente de celle dans laquelle sont mesurées les tables-r en laboratoire :
   - Angles d'observation de 5°, 10°, 20°, 30°, ... , différents de l'angle de 1 ° ;
   - Nombre d'angles d'incidence réduit : 0°, 10°, 20°, 30°, 150°.
      La mesure sur site avec un angle d'observation de 1° n'étant pas possible avec la précision requise, et/ou
- les mesures sur sites sont faites en de multiples endroits afin de tenir compte de la non homogénéité / non uniformité des revêtements réels. La "table-r" représentative du revêtement étant la moyenne des tables-r déduites des différentes mesures effectuées sur le même site, et/ou
- la comparaison des résultats de mesures sur site se fait à l'aide d'un logiciel adapté faisant partie de l'invention

L'invention définit ainsi un appareil portable de mesures des caractéristiques de réflexion d'une surface "plane" comprenant au moins une source lumineuse et au moins une cellule photovoltaïque, toutes deux orientées selon un ou plusieurs angles déterminés par rapport à la surface à mesurer, comprenant
- au moins trois sources lumineuses à faisceaux dirigés sur une même aire de la surface à analyser,
- au moins deux ensembles de cellules photovoltaïques calibrées en luminance, munies de tubes support colimatant la lumière réfléchie, chaque cellule d'un ensemble étant orientée, avec son tube support, selon un angle différent par rapport à la surface à mesurer, et lesdits au moins deux ensembles de cellules étant disposés dans des plans différents, perpendiculaires à la surface à analyser,
- au moins une cellule photovoltaïque supplémentaire par source lumineuse, servant à l'auto-calibrage de celle-ci.
   La notion de surface "plane" telle qu'utilisée dans le présent contexte s'entend évidemment comme une surface essentiellement plane par rapport à la surface de mesure prise en considération.
   La surface peut être essentiellement horizontale ou en pente dans la mesure des possibilités de stabilité de l'appareil.

Dans un mode de réalisation préféré de l'invention, l'appareil comprend plus particulièrement quatre sources lumineuses, disposées dans un plan perpendiculaire à la surface à analyser, selon un angle d'incidence (γ) d'environ 0°, 30°, 50° et 70° respectivement par rapport à la normale à la surface à analyser, et équipées de systèmes optiques (tel que lentille, diaphragmes, etc.) de manière à éclairer une même aire essentiellement circulaire de la surface à analyser, d'un diamètre situé entre 5 et 15 cm, de préférence entre 100 et 125 mm, avec un niveau d'éclairement supérieur à 5000 lux, de préférence supérieure à 15000 lux.

Selon une particularité préférée de l'invention les sources lumineuses sont disposées dans un plan perpendiculaire à la surface à analyser et l'appareil comprend cinq ensembles de cellules photovoltaïques colimatées, lesquels ensembles sont disposés selon des angles (90° - α) de réflexion d'environ 5°, 10°, 20°, 30°, 40°, 50°, 60°, 70° et 80° par rapport à la normale à la surface à analyser et dans des plans perpendiculaires à cette surface et faisant un angle (β) de 0°, 10°, 20°, 30° et 150° par rapport au prolongement du plan dans lequel sont disposées les dites sources lumineuses.

Selon encore une autre particularité préférée de l'invention, les caractéristiques de réflexion de la surface à analyser sont mesurées pour chacun des couples d'angles d'incidence (γ) et de réflexion (α et β).

L'invention procure également une méthode pour caractériser les propriétés de réflexion d'une surface nécessaires au calcul d'une installation d'éclairage de performance souhaitée en termes de luminance, à partir de mesures de caractéristiques de réflexion de ladite surface, laquelle méthode comprend
- la mesure in situ, en de multiples endroits, des caractéristiques de réflexion de ladite surface pour un nombre choisi de couples d'angles d'incidence (γ) et de réflexion (α et β) au moyen d'un appareil portable de mesure de caractéristiques de réflexion,
- l'analyse comparative de ces caractéristiques mesurées avec celles contenues dans une base de données comprenant les résultats des mesures similaires effectuées sur des surfaces de référence, cette base de donnée contenant également pour chacune de ces surfaces de référence des caractéristiques de réflexion "normalisées" (c.à.d. répondant à des normes spécifiques) relevées en laboratoire au moyen d'un gonio-réflectomètre, et
- la génération, à partir de cette analyse, de paramètres permettant de caractériser les propriétés de réflexion de ladite surface.

Dans un mode de réalisation préféré de l'invention, cette méthode comprend plus particulièrement la mesure in situ, en de multiples endroits, des caractéristiques de réflexion de la surface au moyen d'un appareil portable tel que défini plus haut.

Selon une particularité préférée de l'invention, la méthode implique que l'analyse comparative des mesures dudit appareil portable avec ladite base de données se fait au moyen d'un logiciel spécifique, incorporé dans un calculateur intégré ou relié audit appareil portable de mesure des caractéristiques de réflexion;
La méthode peut notamment, de manière particulièrement intéressante servir à caractériser les propriétés de réflexion d'une surface de revêtement routier; dans ce cas la méthode comprend l'analyse comparative des caractéristiques mesurées avec celles contenues dans une base de données comprenant les résultats des mesures similaires effectuées sur de nombreux revêtements routiers différents, cette base de donnée contenant également pour chacune de ces surfaces de référence des caractéristiques de réflexion "normalisées", comme par exemple et de préférence des caractéristiques de réflexion normalisées telles que définies par la CIE, appelées "table-r", et
la génération, à partir de cette analyse, de la "table-r" permettant de caractériser les propriétés de réflexion de ladite surface, deux revêtements routiers ayant des caractéristiques de réflexion, mesurées aux différents couples d'angles d'incidence (γ) et de réflexion (α et β), suffisamment proches, à un facteur multiplicatif près du coefficient de clarté qo de la "table-r", pour être caractérisés par la même "table-r".
Ce facteur multiplicatif est calculé par la méthode.

L'invention trouve son application dans le cadre de méthodes de calcul d'une installation d'éclairage pour routes et/ou ouvrages routiers à partir de caractéristiques expérimentales et/ou théoriques des dites routes et/ou des dits ouvrages routiers, et concerne donc spécifiquement toute méthode de calcul, impliquant éventuellement un logiciel adapté, dans laquelle les caractéristiques expérimentales et/ou théoriques des routes et/ou des ouvrages routiers utilisées comprennent des caractéristiques résultant d'un appareil ou d'une méthode selon l'invention.

L'invention a également pour objet tout logiciel permettant la comparaison des résultats de mesure sur site.

En particulier, l'invention a ainsi pour objet une méthode informatique d'analyse comparative de propriétés de réflexion de surfaces de revêtements routiers pour générer des paramètres nécessaires au calcul d'une installation d'éclairage, dans laquelle des caractéristiques de réflexion de revêtement routier mesurées au moyen d'un appareil et/ou une méthode énoncés plus haut, sont comparées à des valeurs de référence de caractéristiques de réflexion de revêtement routier contenues dans une base de données gérée par la méthode, par une analyse de type "de moindre carré", de manière à déterminer le revêtement dans la base de données qui présente les caractéristiques de réflexion les plus proches de celles mesurées, et à établir ainsi des "tables-r" représentatives des surfaces de revêtements routiers mesurés, destinés au calcul d'une installation d'éclairage.

D'autres particularités de l'invention apparaîtront des commentaires suivants et des dessins annexés, dans lesquels,
les figures 1 et 2 sont des représentations schématiques d'un appareil portable de mesure selon l'invention, à partir d'angles de vue différents;
les figures 3 et 4 illustrent le fonctionnement de l'appareil selon l'invention; et
la figure 5 illustre la méthode d'analyse comparative, au moyen d'un logiciel adapté, des caractéristiques mesurées avec des données "tables-r" contenues dans une base de données.

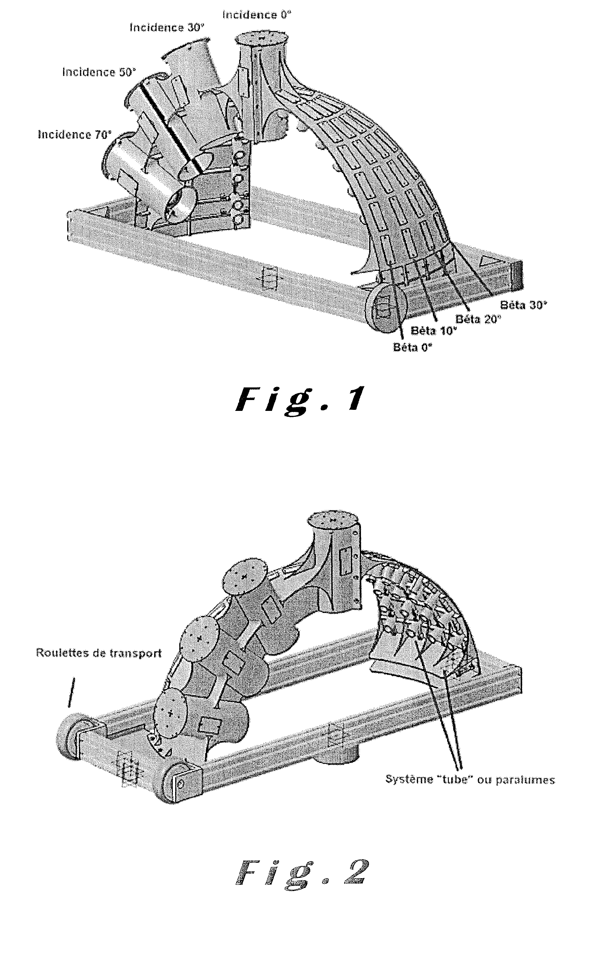

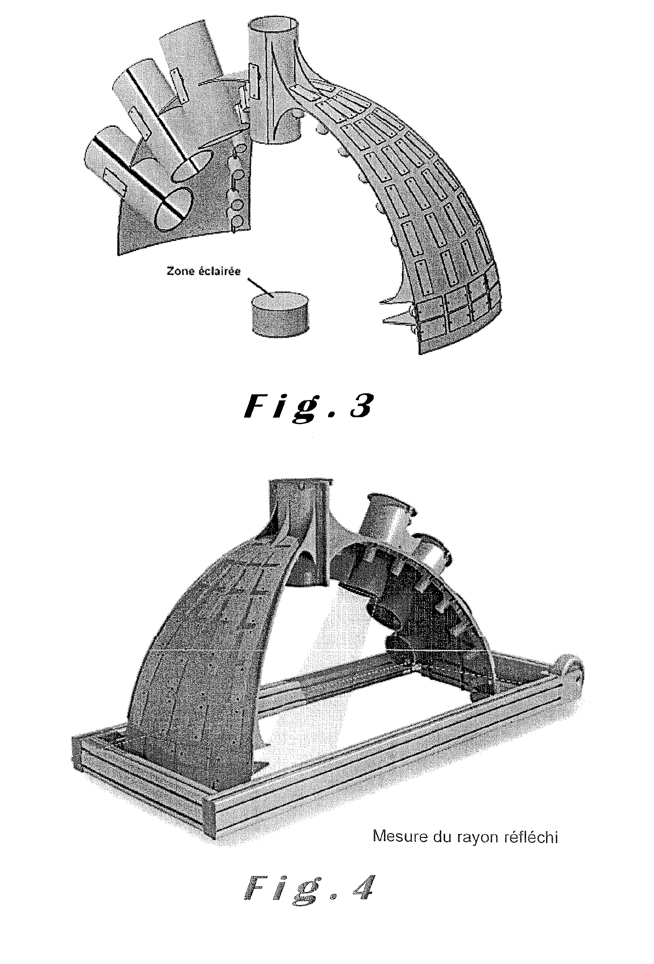

L'appareillage illustré aux figures 1 - 4 est composé de :
- quatre sources lumineuses (50 W) équipées de systêmes optiqes appropriés, positionnées selon 4 angles d'incidence de 0°, 30°, 50° et 70°, de manière à éclairer une surface circulaire (diam. 113 mm) au niveau du sol avec un degré d'uniformité très élevé. Chaque source lumineuse éclaire la même surface. Le niveau de luminance est supérieur à 15000 lux.
- 45 cellules photovoltaïques munies de tubes support colimatant ("petits tubes" et éventuellement caches directionnelles) pour la mesure de la lumière réfléchie. Ces cellules photovoltaïques et leurs tubes colimatant sont calibrés du point de vue de la luminance. Les cellules photovoltaïques sont placées dans 5 plans distincts (appelés plans β) : 0°, 10°, 20°, 30° et 150°.
- 4 autres cellules photovoltaïques permettant un auto-calibrage du système en mesurant la quantité de lumière émise par chaque lampe, et, grâce à ce calibrage, l'évaluation l'illumination de chaque surface éclairée.

La séquence de mesure est la suivante :
1. la lampe n° 1 (incidence 0°) est allumée (les trois autres étant éteintes).
2. Après 3 secondes les 45 cellules photovoltaïques placées sur les bras d'observation mesurent la quantité de lumière réfléchie par le revêtement routier.
3. entretemps, les cellules placées à côté des sources lumineuses mesurent la quantité de lumière émise par celles-ci. Grâce au calibrage du système, l'illumination (l'éclairage) de la surface éclairée peut être calculée.
4. le rapport L/E (Luminance mesurée divisée par Eclairage (illumination) de la surface mesurée) peut alors être calculé
5. la lampe 1 est éteinte
6. la lampe 2 est alumée
7. et ainsi successivement le même cycle avec les lampes 2, 3 et 4. Si l'éclairage de la surface de revêtement routier est trop intense (plus que le revêtement routier le plus clair habituellement rencontré sur la route), le niveau maximum des cellules pourrait être dépassé.
L'intensité lumineuse des sources peut alors être diminuée afin de maintenir la valeur de la lumière réfléchie dans une gamme acceptable (cette fonction est appelée la fonction d'atténuation ("dimming")

Les différentes valeurs sont collectées au moyen d'un ordinateur portable, par l'intermédiaire d'une carte "d'acquisition de données" et un logiciel adapté.
Le système est alimenté au moyen d'une batterie intégrée et est ainsi entièrement autonome
Dans l'exemple décrit les dimensions sont de l'ordre de 1020 x 420 x 520 mm.
Tel que conçu dans l'exemple décrit, le système ne nécessite pas de temps de préchauffage.

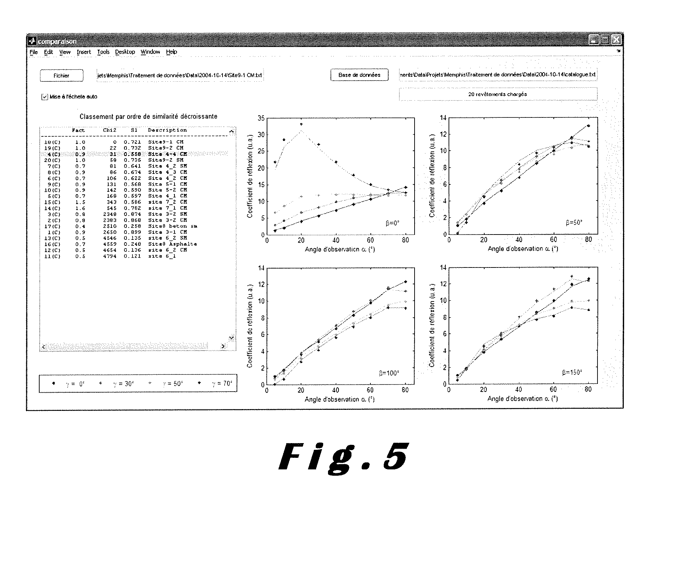

Le principe de la méthode d'analyse comparative des données est le suivant (voir également figure 5) :
Après avoir mesuré les valeurs des caractéristiques des revêtements routiers, on compare les valeurs collectées (valeurs moyennes des différentes mesures sur un même revêtement) à toutes les valeurs (mesurées avec l'appareillage portable) dans la base de données. En comparant ces données, il est alors possible, en utilisant des méthodes "de moindre carré", de déterminer la surface de revêtement dans la base de données qui présente les caractéristiques de réflexion les plus proches de celles mesurées.
Lorsqu'on a ainsi le type de revêtement routier, on peut utiliser les "tables-r" (mesurées au moyen du gonio-réflectomètre de laboratoire) dans un logiciel de calcul adapté (connu en soi de l'homme de métier), pour prédire les valeurs de luminance et de niveau d'uniformité.

Bien entendu, la précision de la méthode dépendra essentiellement de la taille de la base de données disponible.
Le logiciel adapté, développé sur base des principes énoncés ci-dessus permet d'effectuer les analyses / comparaisons d'une manière aisée et rapide.

## Revendications

1. Appareil portable de mesures des caractéristiques de réflexion d'une surface plane comprenant au moins une source lumineuse et au moins une cellule photovoltaïque, toutes deux orientées selon un ou plusieurs angles déterminés par rapport à la surface à mesurer, **caractérisé en ce que** l'appareil comprend
- au moins trois sources lumineuses à faisceaux dirigés sur une même aire de la surface à analyser,
- au moins deux ensembles de cellules photovoltaïques calibrées en luminance, munies de tubes support colimatant la lumière réfléchie, chaque cellule d'un ensemble étant orientée, avec son tube support, selon un angle différent par rapport à la surface à mesurer, et lesdits au moins deux ensembles de cellules étant disposés dans des plans différents, perpendiculaires à la surface à analyser,
- au moins une cellule photovoltaïque supplémentaire par source lumineuse, servant à l'auto-calibrage de celle-ci.

2. Appareil selon la revendication 1, **caractérisé en ce que** l'appareil comprend quatre sources lumineuses, disposées dans un plan perpendiculaire à la surface à analyser, selon un angle d'incidence (γ) d'environ 0°, 30°, 50° et 70° respectivement par rapport à la normale à la surface à analyser, et équipées de systèmes optiques de manière à éclairer une même aire essentiellement circulaire de la surface à analyser, d'un diamètre situé entre 5 et 15 cm, de préférence entre 100 et 125 mm, avec un niveau d'éclairement supérieur à 5000 lux, de préférence supérieure à 15000 lux.

3. Appareil selon l'une ou l'autre des revendications précédentes, **caractérisé en ce que** lesdites sources lumineuses sont disposées dans un plan perpendiculaire à la surface à analyser et **en ce que** l'appareil comprend cinq ensembles de cellules photovoltaïques colimatées, lesquels ensembles sont disposés selon des angles (90° - α) de réflexion d'environ 5°, 10°, 20°, 30°, 40°, 50°, 60°, 70° et 80° par rapport à la normale à la surface à analyser et dans des plans perpendiculaires à cette surface et faisant un angle (β) de 0°, 10°, 20°, 30° et 150° par rapport au prolongement du plan dans lequel sont disposées les dites sources lumineuses.

4. Appareil selon l'une ou l'autre des revendications précédentes, **caractérisé en ce que** les caractéristiques de réflexion de la surface à analyser sont mesurées pour chacun des couples d'angles d'incidence (γ) et de réflexion (α et β).

5. Méthode pour caractériser les propriétés de réflexion d'une surface nécessaires au calcul d'une installation d'éclairage de performance souhaitée en termes de luminance, à partir de mesures de caractéristiques de réflexion de ladite surface, **caractérisée en ce que** la méthode comprend
- la mesure in situ, en de multiples endroits, des caractéristiques de réflexion de ladite surface pour un nombre choisi de couples d'angles d'incidence (γ) et de réflexion (α et β) au moyen d'un appareil portable de mesure de caractéristiques de réflexion,
- l'analyse comparative de ces caractéristiques mesurées avec celles contenues dans une base de données comprenant les résultats des mesures similaires effectuées sur des surfaces de référence, cette base de donnée contenant également pour chacune de ces surfaces de référence des caractéristiques de réflexion "normalisées" relevées en laboratoire au moyen d'un gonio-réflectomètre, et
- la génération, à partir de cette analyse, de paramètres permettant de caractériser les propriétés de réflexion de ladite surface.

6. Méthode selon la revendication 5, **caractérisée en ce que** la méthode comprend la mesure in situ, en de multiples endroits, des caractéristiques de réflexion de la surface au moyen d'un appareil portable selon l'une ou l'autre des revendications 1 à 4.

7. Méthode selon l'une ou l'autre des revendications 5 et 6, **caractérisée en ce que** l'analyse comparative des mesures dudit appareil portable avec ladite base de données se fait au moyen d'un logiciel spécifique, incorporé dans un calculateur intégré ou relié audit appareil portable de mesure de caractéristiques de réflexion.

8. Méthode selon l'une ou l'autre des revendications 5 à 7, pour caractériser les propriétés de réflexion d'une surface de revêtement routier, **caractérisé en ce que** la méthode comprend l'analyse comparative des caractéristiques mesurées avec celles contenues dans une base de données comprenant les résultats des mesures similaires effectuées sur de nombreux revêtements routiers différents, cette base de donnée contenant également pour chacune de ces surfaces de référence des caractéristiques de réflexion normalisées appelées "table-r", et
la génération, à partir de cette analyse, de la "table-r" permettant de caractériser les propriétés de réflexion de ladite surface, deux revêtements routiers ayant des caractéristiques de réflexion, mesurées aux différents couples d'angles d'incidence (γ) et de réflexion (α et β), suffisamment proches, à un facteur multiplicatif près du coefficient de clarté qo de la "tabie-r", pour être **caractérisés par** la même "tabie-r".

9. Méthode informatique d'analyse comparative de propriétés de réflexion de surfaces de revêtements routiers pour générer des paramètres nécessaires au calcul d'une installation d'éclairage, **caractérisée en ce que** des caractéristiques de réflexion de revêtement routier mesurées au moyen d'un appareil et/ou une méthode selon l'une ou l'autre des revendications 1 à 8 sont comparées à des valeurs de référence de caractéristiques de réflexion de revêtement routier contenues dans une base de données gérée par la méthode, par une analyse de type "de moindre carré", de manière à déterminer le revêtement dans la base de données qui présente les caractéristiques de réflexion les plus proches de celles mesurées, et à établir ainsi des "tables-r" représentatives des surfaces de revêtements routiers mesurés, destinés au calcul d'une installation d'éclairage.
